(19) Europäisches Patentamt
European Patent Office
Office européen des brevets

(11) **EP 4 793 124 A1**

(12) **EUROPEAN PATENT APPLICATION**

(43) Date of publication:
**19.08.2026 Bulletin 2026/34**

(21) Application number: **26156931.3**

(22) Date of filing: **06.02.2026**

(51) International Patent Classification (IPC):
***B61C 1/00*** *(2006.01)*

(52) Cooperative Patent Classification (CPC):
(C-Sets available)
**B61C 1/00;** C08K 2201/006 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 JP 2025024192**

(71) Applicant: **Sumitomo Rubber Industries, Ltd.**
**Kobe-shi, Hyogo 651-0072 (JP)**

(72) Inventors:
- **UNNO, Yuma**
  **Kobe-shi, Hyogo, 651-0072 (JP)**
- **KAJITA, Mio**
  **Kobe-shi, Hyogo, 651-0072 (JP)**

(74) Representative: **Manitz Finsterwald**
**Patent- und Rechtsanwaltspartnerschaft mbB**
**Ganghoferstraße 29**
**80339 München (DE)**

(54) **RUBBER COMPOSITION AND TIRE**

(57) Provided are a rubber composition and a tire that have excellent overall performance in terms of fuel economy, abrasion resistance, and wet grip performance. The rubber composition contains a silane coupling agent, the silane coupling agent including an organosilicon compound containing at least one of a silanol group or an alkoxysilyl group, the silane coupling agent having a ratio (percentage of a dimer/total percentage of a monomer and a dimer) of a percentage of a dimer of the organosilicon compound relative to a total percentage of a monomer and the dimer of the organosilicon compound of 0.40 or lower.

EP 4 793 124 A1

(52) Cooperative Patent Classification (CPC): (Cont.)

C-Sets
**C08K 3/04, C08L 9/00;**
**C08K 3/04, C08L 9/06;**
**C08K 3/36, C08L 9/00;**
**C08K 3/36, C08L 9/06;**
**C08K 5/5419, C08L 9/00;**
**C08K 5/5419, C08L 9/06;**
**C08K 5/548, C08L 9/00;**
**C08K 5/548, C08L 9/06**

## Description

### TECHNICAL FIELD

The present invention relates to a rubber composition and a tire including the rubber composition.

### BACKGROUND ART

Silica is widely used as a filler in rubber compositions to improve the properties such as fuel economy. Silica is likely to aggregate and poorly dispersible due to the silanol groups on its surface. In order to improve the dispersibility of silica, a silane coupling agent is used together with silica, and various studies are being conducted (see Patent Literature 1).

### CITATION LIST

### PATENT LITERATURE

Patent Literature 1: JP 2010-216952 A

### SUMMARY OF INVENTION

### TECHNICAL PROBLEM

The present invention aims to solve the above problem and provide a rubber composition and a tire that have excellent overall performance in terms of fuel economy, abrasion resistance, and wet grip performance.

### SOLUTION TO PROBLEM

The present invention relates to a rubber composition containing a silane coupling agent,

the silane coupling agent including an organosilicon compound containing at least one of a silanol group or an alkoxysilyl group,
the silane coupling agent having a ratio (percentage of a dimer/total percentage of a monomer and a dimer) of a percentage of a dimer of the organosilicon compound relative to a total percentage of a monomer and the dimer of the organosilicon compound of 0.40 or lower.

### ADVANTAGEOUS EFFECTS OF INVENTION

The rubber composition according to the present invention contains a silane coupling agent, the silane coupling agent including an organosilicon compound containing at least one of a silanol group or an alkoxysilyl group, the silane coupling agent having a ratio (percentage of a dimer/total percentage of a monomer and a dimer) of a percentage of a dimer of the organosilicon compound relative to a total percentage of a monomer and the dimer of the organosilicon compound of 0.40 or lower. Thus, the present invention can provide a rubber composition that has excellent overall performance in terms of fuel economy, abrasion resistance, and wet grip performance.

### DESCRIPTION OF EMBODIMENTS

The rubber composition contains a silane coupling agent. The silane coupling agent includes an organosilicon compound containing at least one of a silanol group or an alkoxysilyl group, and has a ratio (percentage of a dimer/total percentage of a monomer and a dimer) of a percentage of a dimer of the organosilicon compound relative to a total percentage of a monomer and the dimer of the organosilicon compound of 0.40 or lower.
For example, in a rubber composition containing bis(3-triethoxysilylpropyl) disulfide as a silane coupling agent, the triethoxysilyl group (-$Si(OC_2H_5)_3$) functions as a silica reaction site. If this group undergoes a condensation reaction and becomes a dimer over time, its reactivity with silica significantly decreases. This is believed to degrade the properties of the rubber composition, such as fuel economy, abrasion resistance, and wet grip performance.
In contrast, the silane coupling agent in the above-described rubber composition has a ratio of a percentage of a dimer of the organosilicon compound containing at least one of a silanol group or an alkoxysilyl group relative to a total percentage of a monomer and the dimer of the organosilicon compound of 0.40 or lower.

Thus, the silane coupling agent in the rubber composition is highly reactive with silica, presumably improving the overall performance in terms of fuel economy, abrasion resistance, and wet grip performance.

The rubber composition contains a silane coupling agent including an organosilicon compound containing at least one of a silanol group or an alkoxysilyl group. The silane coupling agent has a ratio (percentage of a dimer of the organosilicon compound containing at least one of a silanol group or an alkoxysilyl group/total percentage of a monomer of the organosilicon compound containing at least one of a silanol group or an alkoxysilyl group and the dimer of the organosilicon compound containing at least one of a silanol group or an alkoxysilyl group) of a percentage of a dimer of the organosilicon compound containing at least one of a silanol group or an alkoxysilyl group relative to a total percentage of a monomer of the organosilicon compound containing at least one of a silanol group or an alkoxysilyl group and the percentage of a dimer of the organosilicon compound containing at least one of a silanol group or an alkoxysilyl group of 0.40 or lower. The ratio of the dimer is preferably 0.35 or lower, more preferably 0.30 or lower, still more preferably 0.25 or lower. The lower limit is not limited. Since the lowest possible ratio of the dimer is desirable, the lower limit may be 0.00.

For example, the ratio "percentage of a dimer/total percentage of a monomer and a dimer" may be adjusted to 0.40 or lower by the technique (1) or the technique (2) below.

(1) The organosilicon compound containing at least one of a silanol group or an alkoxysilyl group is dissolved in a solvent such as an alcohol (e.g., ethanol) or water, and a reaction is performed at a predetermined temperature (e.g., 28°C to 50°C).

(2) The organosilicon compound containing at least one of a silanol group or an alkoxysilyl group is heated at a predetermined temperature (e.g., 60°C to 100°C) for a predetermined time (e.g., 60 to 120 minutes).

The percentage of the dimer or the monomer of the organosilicon compound containing at least one of a silanol group or an alkoxysilyl group may be measured by any method capable of measuring the percentage.

From the standpoint of accurately calculating the intensity ratio (percentage) of the dimer, the ratio "percentage of a dimer/total percentage of a monomer and a dimer" is desirably calculated from the percentage of the monomer and the percentage of the dimer determined by ESI-QTOF-MS analysis of an extract of the rubber composition.

In the ESI-QTOF-MS analysis, electrospray ionization (ESI) is a method for ionizing a sample in mass spectrometry. ESI is an effective ionization method for ionic/high polar compounds.

A quadrupole time-of-flight mass spectrometer (QTOF-MS) is an instrument used in mass spectrometry. QTOF-MS is a mass spectrometer combining two mass analysis methods, specifically, the quadrupole type mass spectrometry and the time-of-flight type mass spectrometry and therefore enables high-resolution mass spectrometry.

In the ESI-QTOF-MS analysis, flow injection analysis (FIA) can be suitably used. FIA involves introducing a sample into the flow of a solvent (mobile phase) for analysis.

For example, the ESI-QTOF-MS analysis of an extract of the rubber composition (vulcanized rubber composition) can be performed by the following technique.

The extract is desirably obtained using a reprecipitation method. A shredded rubber sample (e.g., 1 mm × 1 mm × 1 mm) is added to THF to a concentration of 50 mg/2 mL (for a sample with no silica) or 80 mg/2 mL (for a sample with silica), and the mixture is shaken overnight. Subsequently, 40 mL of acetonitrile is added to the resulting mixture. After shaking, the supernatant is collected to obtain an extract.

Here, a small percentage of the dimer in the extract is considered to indicate a small percentage of the dimer in the sample.

The conditions for the ESI-QTOF-MS analysis may be set as appropriate to enable the analysis.

The measurement can be performed in isocratic mode with a mobile phase prepared from a mixture of, for example, a 10 mM ammonium acetate aqueous solution (45%), acetonitrile (45%), and THF (10%).

In the mass spectrometry (MS), for example, the cone voltage is preferably 100 to 140 V, the capillary voltage is preferably 1.5 to 2.5 kV, and the desolvation gas temperature is preferably 500°C to 600°C.

An extracted ion chromatogram is obtained by the ESI-QTOF-MS analysis of the extract of the rubber composition, and m/z peak areas of the chromatogram are obtained.

In the m/z peak areas of the chromatogram, a ratio (X2mer (= S2mer/(S1mer + S2mer))) of a total peak area (S2mer) attributed to a dimer of the organosilicon compound containing at least one of a silanol group or an alkoxysilyl group relative to a sum (S1mer + S2mer) of a total peak area (S1mer) attributed to a monomer of the organosilicon compound containing at least one of a silanol group or an alkoxysilyl group and the total peak area (S2mer) attributed to a dimer of the organosilicon compound containing at least one of a silanol group or an alkoxysilyl group is calculated. Thus, the dimer ratio (percentage of a dimer/total percentage of a monomer and a dimer) can be determined. The X2mer of the rubber composition determined as above is 0.40 or lower.

Based on the determined X2mer, the percentage of the dimer can be compared between samples (rubber compositions). A sample with a higher X2mer can be regarded as having a higher dimer percentage. Therefore, a low X2mer, specifically, 0.40 or lower, indicates a low dimer percentage. In this case, the silane coupling agent is highly reactive

with silica in the rubber composition, presumably thereby improving the overall performance in terms of fuel economy, abrasion resistance, and wet grip performance.

In the organosilicon compound containing at least one of a silanol group or an alkoxysilyl group, the silanol group refers to a group (SiOH group) in which a hydroxy group (-OH) is directly bonded to a silicon atom.

The alkoxysilyl group refers to a group (SiOR group) in which an alkoxy group (oxyhydrocarbon group) is bonded to a silicon atom.

Examples of the alkoxysilyl group include a -SiOR group (wherein R represents a C1-C10 alkyl group).

Examples of the monomer of the organosilicon compound containing at least one of a silanol group or an alkoxysilyl group include silane coupling agents known in the rubber field.

Specific examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., or other manufacturers. Each of these may be used alone, or two or more of these may be used in combination.

For example, the dimer of the organosilicon compound containing at least one of a silanol group or an alkoxysilyl group is formed through condensation of organosilicon compounds containing a silanol group (-SiOH), condensation of an organosilicon compound containing a silanol group (-SiOH) and an organosilicon compound containing an alkoxysilyl group (-SiOR), or condensation of organosilicon compounds containing an alkoxysilyl group (-SiOR) (wherein R represents, for example, an alkyl group or an alkoxyalkyl group). Specifically, for example, the dimer is formed through a condensation reaction of one or more compounds listed above as a monomer of the organosilicon compound containing at least one of a silanol group or an alkoxysilyl group.

The amount of the silane coupling agent per 100 parts by mass of silica in the rubber composition is preferably 0.1 parts by mass or more, more preferably 3 parts by mass or more, still more preferably 5 parts by mass or more. The upper limit of the amount is preferably 50 parts by mass or less, more preferably 20 parts by mass or less, still more preferably 15 parts by mass or less. When the amount is within the range indicated above, the advantageous effect tends to be better achieved.

The materials of the rubber composition other than the silane coupling agent will be described below.

The rubber composition contains a rubber component.

Herein, the rubber component is a component that contributes to cross-linking and generally corresponds to a polymer component which has a weight average molecular weight (Mw) of 10000 or more and which is not extractable with acetone. The component is solid at 25°C.

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component usable in the rubber composition may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of rubber components usable in the rubber composition include diene-based rubbers. Examples of diene-based rubbers include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of such rubber components also include butyl-based rubbers and fluororubbers. Each of these may be used alone, or two or more of these may be used in combination. Modified or hydrogenated products of these rubber components are also usable. Extended rubbers extended with oils, resins, liquid rubber components, or the like are usable as well.

The materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant.

Then, the $^{14}C$ content of materials derived from biomass resources which are circulating in the current environment is about $1 \times 10^{-10}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured $^{14}C$ content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC, i.e., materials such as rubber with a high biomass ratio can suitably be used in rubber compositions for environmental protection.

In particular, the rubber composition preferably contains at least one selected from the group consisting of an isoprene-based rubber, BR, and SBR, and more preferably contains SBR.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= $(20 \times 90 + 10 \times 40)/(20 + 10)$).

The BR may be either unmodified BR or modified BR. Examples of the modified BR include those into which the functional groups listed for the modified rubbers have been introduced. The BR may also be hydrogenated polybutadiene polymers (hydrogenated BR).

Any SBR may be used. Examples include emulsion-polymerized styrene-butadiene rubbers (E-SBR) and solution-polymerized styrene-butadiene rubbers (S-SBR). Each of these may be used alone or two or more of these may be used in combination.

The styrene content of the SBR is preferably 5% by mass or higher, more preferably 20% by mass or higher, still more preferably 21% by mass or higher, further preferably 23.5% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by $^{1}H$-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= $(85 \times 40 + 5 \times 25)/(85 + 5)$).

The vinyl bond content of the SBR is preferably 30% by mass or higher, more preferably 40% by mass or higher, still more preferably 50% by mass or higher. The vinyl bond content is preferably 70% by mass or lower, more preferably 65% by mass or lower, still more preferably 60% by mass or lower. When the vinyl bond content is within the range indicated

above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass) }/{75 × (100 (% by mass) - 40 (% by mass)) + 15 × (100 (% by mass) - 25 (% by mass))}.

The SBR may be either unmodified SBR or modified SBR. Examples of the modified SBR include those into which the functional groups listed for the modified rubbers have been introduced. The SBR may also be hydrogenated styrene-butadiene copolymers (hydrogenated SBR).

The amount of an isoprene-based rubber, if present, in the rubber composition based on 100% by mass of the rubber component is preferably 5% by mass or more, more preferably 10% by mass or more, still more preferably 15% by mass or more, and may be 100% by mass.

The amount of BR, if present, in the rubber composition based on 100% by mass of the rubber component is preferably 5% by mass or more, more preferably 10% by mass or more, still more preferably 15% by mass or more, and may be 100% by mass.

The amount of SBR, if present, in the rubber composition based on 100% by mass of the rubber component is preferably 5% by mass or more, more preferably 10% by mass or more, still more preferably 15% by mass or more, and may be 100% by mass.

The rubber composition desirably contains silica.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. Each of these silica may be used alone, or two or more of these may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid, which is a component thereof, cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar, or other manufacturers.

The nitrogen adsorption specific surface area ($N_2SA$) of the silica is preferably 50 $m^2/g$ or more, more preferably 100 $m^2/g$ or more, still more preferably 150 $m^2/g$ or more, further preferably 175 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less, further preferably 200 $m^2/g$ or less. When the $N_2SA$ is within the range indicated above, the advantageous effect tends to be better achieved.

Here, the $N_2SA$ of silica is measured by a BET method in accordance with ASTM D3037-93.

The amount of the silica per 100 parts by mass of the rubber component in the rubber composition is preferably 5 parts by mass or more, more preferably 40 parts by mass or more, still more preferably 60 parts by mass or more, while it is preferably 200 parts by mass or less, more preferably150 parts by mass or less, still more preferably 100 parts by mass or less, further preferably 70 parts by mass or less. When the amount is within the range indicated above, the advantageous

effect tends to be better achieved.

The rubber composition may contain a filler other than silica.

The filler is not limited and may be a known material in the rubber field. Examples of the filler include inorganic fillers such as carbon black, silica, calcium carbonate, talc, alumina, clay, aluminum hydroxide, aluminum oxide, and mica; bio char; and hard-to-disperse fillers such as microfibrillated plant fibers, short fibrous celluloses, and gel compounds. In particular, the rubber composition preferably contains carbon black. Each of these fillers may be used alone, or two or more of these may be used in combination.

Non-limiting examples of carbon black usable in the rubber composition include N134, N110, N220, N234, N219, N339, N330, N326, N351, N550, and N762. The material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, or other manufacturers. Each of these may be used alone, or two or more of these may be used in combination.

The nitrogen adsorption specific surface area ($N_2SA$) of the carbon black is preferably 20 $m^2/g$ or more, more preferably 30 $m^2/g$ or more, still more preferably 40 $m^2/g$ or more. The $N_2SA$ is preferably 150 $m^2/g$ or less, more preferably 130 $m^2/g$ or less, still more preferably 120 $m^2/g$ or less. When the $N_2SA$ is within the range indicated above, the advantageous effect tends to be better achieved.

Herein, the nitrogen adsorption specific surface area of the carbon black may be determined in accordance with JIS K 6217-2:2001.

The amount of carbon black, if present, in the rubber composition per 100 parts by mass of the rubber component is preferably 5 parts by mass or more, more preferably 30 parts by mass or more, still more preferably 40 parts by mass or more, while it is preferably 150 parts by mass or less, more preferably 100 parts by mass or less, still more preferably 80 parts by mass or less. When the amount is within the range indicated above, the advantageous effect tends to be better achieved.

The amount of the filler (total amount of fillers such as carbon black and silica) per 100 parts by mass of the rubber component in the rubber composition is preferably 5 parts by mass or more, more preferably 30 parts by mass or more, still more preferably 60 parts by mass or more, while it is preferably 200 parts by mass or less, more preferably 150 parts by mass or less, still more preferably 120 parts by mass or less. When the amount is within the range indicated above, the advantageous effect tends to be better achieved.

The rubber composition may contain a plasticizer (softening agent).

Herein, the term "plasticizer" refers to a material that imparts plasticity to rubber components and conceptually includes both plasticizers that are liquid at room temperature (25°C) and plasticizers that are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of oils include process oils, plant oils, and animal oils. Examples of process oils include paraffinic process oils (mineral oils), naphthenic process oils, and aromatic process oils. Specific examples of process oils include mild extracted solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone, or two or more of these may be used in combination.

The plant oils according to the present embodiments each preferably contain acylglycerol and more preferably

contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C).

Whether a rubber composition contains the acylglycerol may be examined by any method such as $^{1}$H-NMR analysis. For example, a rubber composition containing triacylglycerol is immersed in deuterium chloroform at room temperature (25°C) for 24 hours. After removing the rubber composition, the $^{1}$H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or the like to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, or other manufacturers.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, or other manufacturers.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at room temperature (25°C), if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at room temperature (25°C) is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the

skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., or other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers that are liquid at room temperature (25°C) are desirable.

The amount of the plasticizer (total amount of plasticizers), if present, in the rubber composition per 100 parts by mass of the rubber component is preferably 3 parts by mass or more, more preferably 6 parts by mass or more, still more preferably 8 parts by mass or more, while it is preferably 50 parts by mass or less, more preferably 20 parts by mass or less, still more preferably 15 parts by mass or less. When the amount is within the range indicated above, the advantageous effect tends to be better achieved.

Here, the amount of the plasticizer includes the amounts of oils and resins contained in oil-extended rubbers and resin-extended rubbers.

The rubber composition may further contain vulcanized rubber particles.

The term "vulcanized rubber particles" refers to particles made of vulcanized rubber. Specifically, the rubber powder stipulated in JIS K 6316:2017 may be used. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, or other manufacturers.

The amount of vulcanized rubber particles per 100 parts by mass of the rubber component in the rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effect tends to be better achieved.

In view of the properties such as crack resistance and ozone resistance, the rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the rubber composition is preferably 0.5 parts by mass or more, more preferably 1.5 parts by mass or more, still more preferably 2.5 parts by mass or more. The amount is preferably 7.0 parts by mass or less, more preferably 5.0 parts by mass or less.

The rubber composition preferably contains stearic acid.

The amount of the stearic acid per 100 parts by mass of the rubber component in the rubber composition is preferably 1.0 parts by mass or more, more preferably 3.0 parts by mass or more, while it is preferably 10.0 parts by mass or less, more preferably 5.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., or other manufacturers.

The rubber composition preferably contains zinc oxide.

The amount of the zinc oxide per 100 parts by mass of the rubber component in the rubber composition is preferably 1.0 parts by mass or more, more preferably 3.0 parts by mass or more, while it is preferably 10 parts by mass or less, more preferably 5.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., or other manufacturers.

The rubber composition preferably contains a wax.

The wax is not limited. Any wax usually used in the rubber industry may suitably be used. Examples of the wax include mineral wax and plant-derived wax. The term "mineral wax" refers to wax derived from mineral resources such as petroleum or natural gas. The term "plant-derived wax" refers to wax derived from natural resources such as plants.

Mineral wax is preferred among these. Examples of plant-derived wax include rice wax, carnauba wax, and candelilla wax. Examples of mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, or other manufacturers. Each of these waxes may be used alone, or two or more of these may be used in combination. As described above, a wax having a target carbon number distribution can be prepared using a combination of two or more waxes.

The amount of the wax per 100 parts by mass of the rubber component in the rubber composition is preferably 0.5 parts by mass or more, more preferably 0.8 parts by mass or more, still more preferably 1.0 parts by mass or more, while it is preferably 5.0 parts by mass or less, more preferably 3.0 parts by mass or less, still more preferably 2.0 parts by mass or less.

The rubber composition preferably contains sulfur.

The amount of the sulfur per 100 parts by mass of the rubber component in the rubber composition is preferably 0.5 parts by mass or more, more preferably 0.8 parts by mass or more, still more preferably 1.4 parts by mass or more. The amount is preferably 3.5 parts by mass or less, more preferably 3.0 parts by mass or less, still more preferably 2.5 parts by mass or less. When the amount is within the range indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., or other manufacturers. Each of these may be used alone, or two or more of these may be used in combination.

The rubber composition preferably contains a vulcanization accelerator.

The amount of the vulcanization accelerator in the rubber composition is not limited and may be freely determined according to the desired curing rate and cross-link density. Still, the amount per 100 parts by mass of the rubber component is preferably 0.5 parts by mass or more, more preferably 2.1 parts by mass or more. The upper limit is preferably 8.0 parts by mass or less, more preferably 6.0 parts by mass.

Any type of vulcanization accelerator may be used, including those generally used. Examples of the vulcanization accelerator include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants) may be derived from carbon dioxide in the air. The materials may be obtained from carbon dioxide by directly converting carbon dioxide or by synthesizing methane from carbon dioxide through methanation and then converting the methane.

The rubber composition can be produced by, for example, kneading the above-described components using a rubber mixing machine such as an open roll mill or a Banbury mixer and then vulcanizing the kneaded mixture.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

The overall performance in terms of fuel economy, abrasion resistance, and wet grip performance of a rubber composition (sample) containing the silane coupling agent can be evaluated based on the ratio "percentage of a dimer/total percentage of a monomer and a dimer" of the percentage of the dimer of the organosilicon compound containing at least one of a silanol group or an alkoxysilyl group relative to the total percentage of the monomer and the dimer of the organosilicon compound. Specifically, a sample with a lower ratio "percentage of a dimer/total percentage of a monomer and a dimer" can be evaluated as having a better overall performance.

The rubber composition is usable as a tire component.

Examples of the tire component include a tread such as a cap tread or a base tread, a sidewall, a clinch, a bead

apex, a breaker cushion rubber, a rubber for carcass cord topping, an insulation, a chafer, an innerliner, and a side reinforcing layer for run-flat tires.

The tire is produced using the rubber composition by a usual method. Specifically, the rubber composition containing necessary additives before vulcanization is extruded and processed into the shape of a tire component and subsequently molded on a tire building machine by a usual method. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, or other types of tires.

EXAMPLES

Examples (working examples) which are considered preferable to implement the present invention are described below although the scope of the present invention is not limited to the examples.

The chemicals used are listed below. If necessary, the chemicals are purified by usual techniques.

SBR: NS616 (non-oil-extended SBR, styrene content 21% by mass, vinyl content 66% by mass, Tg -23°C, Mw 240000) available from Zeon Corporation
Silica: Ultrazil VN3 ($N_2SA$ 175m$^2$/g) available from Evonik Degussa
Organosilicon compound: Si266 (bis(3-triethoxysilylpropyl)disulfide) available from Evonik Degussa
Stearic acid: TSUBAKI available from NOF Corporation
Zinc oxide: zinc oxide #2 available from Mitsui Mining & Smelting Co., Ltd.
Sulfur (oil content 5%): powdered sulfur available from Tsurumi Chemical Industry Co., Ltd.
Vulcanization accelerator 1: NOCCELER NS (N-tert-butyl-2-benzothiazylsulfenamide (TBBS)) available from Ouchi Shinko Chemical Industrial Co., Ltd.
Vulcanization accelerator 2: Sanceler D (diphenyl guanidine) available from Sanshin Chemical Industry Co., Ltd.

<Production of rubber composition>

According to the conditions shown in Table 1, the organosilicon compound was dissolved in an ethanol solution containing 10% of water, and a rection was performed at 32°C for 10 minutes. Further, the reaction solution was heated using an oven at 80°C for 60, 80, and 120 minutes to prepare organosilicon compounds obtained after 60-minute heating, 80-minute heating, or 120-minte heating (X2mer = 0.25, 0.30, or 0.45).

According to the formulation in Table 1, the treated organosilicon compounds (X2mer = 0.25, 0.30, or 0.45) were each kneaded with the materials other than the sulfur and the vulcanization accelerators using a Banbury mixer at 150°C for five minutes to obtain a kneaded product. To the kneaded product were added the sulfur and the vulcanization accelerators as indicated in Table 1, and they were kneaded using an open roll mill at 80°C for five minutes to obtain an unvulcanized rubber composition.

The unvulcanized rubber composition was vulcanized at 170°C for 12 minutes to obtain a vulcanized rubber composition of Formulation A, B, or C.

<ESI-QTOF-MS analysis>

An extract of the vulcanized rubber composition (Formulation A containing the treated organosilicon compound (X2mer = 0.25), Formulation B containing the treated organosilicon compound (X2mer = 0.30), or Formulation C containing the treated organosilicon compound (X2mer = 0.45) in Table 1) was subjected to flow injection analysis in ESI-QTOF-MS as described below.

- Preparation of extract

The extract was obtained using a reprecipitation method. Specifically, a shredded rubber sample (e.g., 1 mm × 1 mm × 1 mm) was added to THF to a concentration of 80 mg/2 mL, and the mixture was shaken overnight. Subsequently, 40 mL of acetonitrile was added to the resulting mixture. After shaking, the supernatant was collected to obtain an extract.

- ESI-QTOF-MS analysis

(Apparatus used)

Mass spectrometer: XEVOG2XSQT available from Waters
Column heater: UPCHA available from Waters
Pump: UPQSM available from Waters

- Analysis conditions

(Mobile phase conditions)

Isocratic mode in 45% of a 10 mM ammonium acetate aqueous solution, 45% of acetonitrile, and 10% of THF

(MS conditions)

Cone voltage: 120 V
Capillary voltage: 2 kV
Desolvation gas temperature: 550°C
Ionization mode: ESI+

(Other conditions)

Flow rate: 0.3 mL/min
Injection amount: 0.50 μL

(Analysis method)

The m/z peak areas in an extracted ion chromatogram (EIC) obtained by the ESI-QTOF-MS analysis were obtained (retention time was 0.05 min to 0.25 min for all samples). The m/z peak areas are indicated in Table 2.
With regard to the monomers and dimers of the vulcanized rubber compositions (Formulation A, B, and C) in Table 1, a ratio "(peak area attributed to 2mer (1) + peak area attributed to 2mer (2) + peak area attributed to 2mer (3))/(peak area attributed to 1mer (1) + peak area attributed to 1mer (2) + peak area attributed to 1mer (3) + peak area attributed to 1mer (4) + peak area attributed to 2mer (1) + peak area attributed to 2mer (2) + peak area attributed to 2mer (3)) was calculated to determine a ratio (X2mer) of the total peak area (S2mer) attributed to the dimer, thereby obtaining the above values of X2mer = 0.25, 0.30, and 0.45.
The vulcanized rubber compositions (Formulation A, B, and C) were evaluated as described below. Table 1 shows the results.

<Fuel economy>

The loss tangent (tan δ (70°C)) of each vulcanized rubber composition (a test piece with a width of 4 mm, a length of 2 mm, and a thickness of 2 mm) was measured with a viscoelastic spectrometer VES available from Iwamoto Seisakusho Co., Ltd. at an initial strain of 10%, a dynamic strain of 1%, and a temperature of 70°C.
Using the formula below, the obtained tan δ (70°C) was expressed as an index relative to the tan δ (70°C) of the Formulation C taken as 100. A higher index indicates a lower rolling resistance and a better fuel economy.

(Rolling resistance index) = (tan δ (70°C) of Formulation C)/(tan δ (70°C) of each formulation) × 100

<Abrasion resistance>

The abrasion loss of each vulcanized rubber composition was measured with a Lambourn abrasion tester at room temperature, a load of 1.0 kgf, and a slip ratio of 30%. The reciprocal of the abrasion loss was expressed as an index relative to the reciprocal of the abrasion loss of the Formulation C taken as 100. A higher index indicates better abrasion

resistance.

<Wet grip performance>

The tan δ of each vulcanized rubber composition was measured with a viscoelastic spectrometer VES available from Iwamoto Seisakusho Co., Ltd. at a frequency of 10 Hz, a strain of 0.1%, and a temperature of 0°C. The measured tan δ was expressed as an index relative to the tan δ of the Formulation C taken as 100. A higher index indicates better wet grip performance.

<Overall performance>

The overall performance in terms of fuel economy, abrasion resistance, and wet grip performance was evaluated based on the sum of the three indices obtained in the evaluations of fuel economy, abrasion resistance, and wet grip performance. A larger sum indicates better overall performance.

[Table 1]

| | | | | Formulation A | Formulation B | Formulation C |
|---|---|---|---|---|---|---|
| Amount (parts by mass) | SBR | | | 100 | 100 | 100 |
| | Silica | | | 60 | 60 | 60 |
| | Treated organosilicon compound | Ethanol solution 32°C × 10 min + 80°C × 60 min | X2mer = 0.25 | 4.80 | | |
| | | Ethanol solution 32°C × 10 min + 80°C × 80 min | X2mer = 0.30 | | 4.80 | |
| | | Ethanol solution 32°C × 10 min + 80°C × 120 min | X2mer = 0.45 | | | 4.80 |
| | Stearic acid | | | 3.0 | 3.0 | 3.0 |
| | Zinc oxide | | | 3.0 | 3.0 | 3.0 |
| | Sulfur (oil content 5%) | | | 1.57 | 1.57 | 1.57 |
| | Vulcanization accelerator 1 | | | 1.5 | 1.5 | 1.5 |
| | Vulcanization accelerator 2 | | | 0.6 | 0.6 | 0.6 |
| Evaluation | (a) Fuel economy | | | 161 | 139 | 100 |
| | (b) Abrasion resistance | | | 167 | 142 | 100 |
| | (c) Wet grip performance | | | 156 | 136 | 100 |
| | Overall performance (= (a) + (b) + (c)) | | | 484 | 416 | 300 |

[Table 2]

| Peak No. | Structure of organosilicon compound | Counter ion | *m/z* |
|---|---|---|---|
| 1mer (1) | Si266 1mer | $H^+$ | 475.20341 |
| 1mer (2) | | $K^+$ | 513.1593 |
| 1mer (3) | | $Na^+$ | 497.1854 |
| 1mer (4) | | De-ethoxylated | 429.1616 |

(continued)

| Peak No. | Structure of organosilicon compound | Counter ion | *m/z* |
|---|---|---|---|
| 2mer (1) | Si266 2mer | $K^+$ | 913.28225 |
| 2mer (2) | | $NH_4^+$ | 892.35235 |
| 2mer (3) | | $H^+$ | 875.32638 |

The results demonstrate that a low X2mer (dimer ratio (percentage of a dimer/total percentage of a monomer and a dimer) improves each of the fuel economy, abrasion resistance, and wet grip performance, so that the overall performance in terms of fuel economy, abrasion resistance, and wet grip performance is improved.

Comparison between the rubber compositions (samples) can be conducted using the dimer ratio (percentage of a dimer/total percentage of a monomer and a dimer)) based on the calculated X2mer (= S2mer/(S1mer + S2mer)). A rubber composition (sample) with a higher X2mer can be evaluated as having a higher dimer ratio.

## Claims

**1.** A rubber composition comprising a silane coupling agent,

the silane coupling agent including an organosilicon compound containing at least one of a silanol group or an alkoxysilyl group,
the silane coupling agent having a ratio (percentage of a dimer/total percentage of a monomer and a dimer) of a percentage of a dimer of the organosilicon compound relative to a total percentage of a monomer and the dimer of the organosilicon compound of 0.40 or lower.

**2.** The rubber composition according to claim 2,
wherein the rubber composition further comprises silica.

**3.** The rubber composition according to claim 1 or 2,

wherein in m/z peak areas of a chromatogram obtained by ESI-QTOF-MS analysis of an extract of the rubber composition,
a ratio (X2mer) of a total peak area (S2mer) attributed to a dimer of the organosilicon compound containing at least one of a silanol group or an alkoxysilyl group relative to a sum (S1mer + S2mer) of a total peak area (S1mer) attributed to a monomer of the organosilicon compound containing at least one of a silanol group or an alkoxysilyl group and the total peak area (S2mer) attributed to a dimer of the organosilicon compound containing at least one of a silanol group or an alkoxysilyl group is 0.40 or lower.

**4.** The rubber composition according to any one of claims 1 to 3,
wherein the ratio of the dimer is 0.35 or lower.

**5.** The rubber composition according to any one of claims 2 to 4,
wherein the amount of the silane coupling agent per 100 parts by mass of silica in the rubber composition is 0.1 parts by mass or more and 50 parts by mass or less.

**6.** The rubber composition according to any one of claims 1 to 5,
wherein the rubber composition contains at least one selected from the group consisting of an isoprene-based rubber, BR, and SBR.

**7.** The rubber composition according to claim 6,
wherein the amount of SBR based on 100% by mass of the rubber component is 5% by mass or more.

**8.** The rubber composition according to any one of claims 2 to 7,

wherein the nitrogen adsorption specific surface area ($N_2SA$) of the silica is 50 $m^2$/g or more and 350 $m^2$/g or less, when measured by a BET method in accordance with ASTM D3037-93.

**9.** The rubber composition according to any one of claims 2 to 8, wherein the amount of the silica per 100 parts by mass of the rubber component in the rubber composition is 5 parts by mass or more and 200 parts by mass or less.

**10.** The rubber composition according to any one of claims 2 to 9, wherein the rubber composition contains a filler other than silica.

**11.** The rubber composition according to claim 10, wherein the filler other than silica comprises carbon black.

**12.** The rubber composition according to claim 11, wherein the nitrogen adsorption specific surface area ($N_2SA$) of the carbon black is 20 $m^2$/g or more and 150 $m^2$/g or less, when determined in accordance with JIS K 6217-2:2001.

**13.** The rubber composition according to claim 11 or 12, wherein the amount of carbon black in the rubber composition per 100 parts by mass of the rubber component is 5 parts by mass or more and 150 parts by mass or less.

**14.** The rubber composition according to any one of claims 11 to 13, wherein the amount of the filler per 100 parts by mass of the rubber component in the rubber composition is 5 parts by mass or more and 200 parts by mass or less.

**15.** A tire comprising the rubber composition according to claim 1 to 14.

Europäisches
Patentamt
European
Patent Office
Office européen
des brevets

# EUROPEAN SEARCH REPORT

Application Number
EP 26 15 6931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 88/07536 A1 (BTR PLC [GB]) 6 October 1988 (1988-10-06) * abstract; claims 1,9,34 * ----- | 1-15 | INV. B61C1/00 |
| X | JP 2011 063472 A (TOYO TIRE & RUBBER CO) 31 March 2011 (2011-03-31) * abstract; claim 7 * * examples * -& DATABASE CAPLUS [Online] Chemical Abstract Service, Columbus, Ohio, US; 31 March 2011 (2011-03-31), "Ihara Ikuo": "Surface-treated silica, preparation thereof, and manufacture of rubbercomposition and of pneumatic tire therewith", XP093406872, Database accession no. 2011:398166 * abstract * ----- | 1-15 | |
| X | CN 112 678 837 A (WUXI HENGCHENG SILICON IND CO LTD) 20 April 2021 (2021-04-20) * abstract; claim 2 * -& DATABASE CAPLUS [Online] Chemical Abstract Service, Columbus, Ohio, US; 20 April 2021 (2021-04-20), "Chen Nanfei ET AL: "Anti-wet slippery precipitated silica and its preparation method and itsapplication in tire reinforcing agent", XP093406873, Database accession no. 2021:894955 * abstract * ----- | 1-15 | TECHNICAL FIELDS SEARCHED (IPC) B61B B61C C08K |
| X | CN 107 686 564 A (WUXI HENGCHENG SILICON IND CO LTD) 13 February 2018 (2018-02-13) * abstract; claim 1 * -/-- | 1-15 | |

The present search report has been drawn up for all claims

| Place of search | Date of completion of the search | Examiner |
|---|---|---|
| Munich | 15 June 2026 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

1

Europäisches
Patentamt
European
Patent Office
Office européen
des brevets

# EUROPEAN SEARCH REPORT

Application Number
EP 26 15 6931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | -& DATABASE CAPLUS [Online] Chemical Abstract Service, Columbus, Ohio, US; 13 February 2018 (2018-02-13), "Chen Nanfei ET AL: "Preparation method of hydrophobic silica", XP093406875, Database accession no. 2018:250099 * abstract * ----- | 1-15 | |
| E | CN 121 851 975 A (GUANGDONG GLORYSTAR HIGH-TECH INDUSTRY CO., LTD.) 14 April 2026 (2026-04-14) * abstract * -& DATABASE CAPLUS [Online] Chemical Abstract Service, Columbus, Ohio, US; 16 April 2026 (2026-04-16), "Liang Zhuoen ET AL: "Preparation of high-transparency low-odor acetic acid-releasing siliconesealant for industrial sealing, packaging materials, textiles andanti-slip adhesives for socks", XP093406876, Database accession no. 2026:954566 * abstract * ----- | 1-15 | |
| | | | TECHNICAL FIELDS SEARCHED (IPC) |

1

The present search report has been drawn up for all claims

| Place of search | Date of completion of the search | Examiner |
|---|---|---|
| Munich | 15 June 2026 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 6931

This annex lists the patent family members relating to the patent documents cited in the above-mentioned European search report. The members are as contained in the European Patent Office EDP file on
The European Patent Office is in no way liable for these particulars which are merely given for the purpose of information.

15-06-2026

| Patent document cited in search report | Publication date | Patent family member(s) | Publication date |
|---|---|---|---|
| WO 8807536 A1 | 06-10-1988 | AU 1493588 A | 02-11-1988 |
| | | WO 8807536 A1 | 06-10-1988 |
| JP 2011063472 A | 31-03-2011 | NONE | |
| CN 112678837 A | 20-04-2021 | NONE | |
| CN 107686564 A | 13-02-2018 | NONE | |
| CN 121851975 A | 14-04-2026 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010216952 A
- JP 2009002594 A


### Non-patent literature cited in the description


- *Akita Prefectural University Web Journal B*, 2019, vol. 6, 216-222